# EUROPEAN PATENT APPLICATION

(11) **EP 2 540 414 A1**
(43) Date of publication of application: **02.01.2013**
(21) Application number: 10846584.0
(22) Date of filing: 06.10.2010
(51) Int. Cl.: B21K 1/22, B21D 41/04, B21D 53/84, B21J 5/08, F01L 3/24

(54) **METHOD FOR MANUFACTURING HOLLOW ENGINE VALVE**

(30) Priority: 26.02.2010 JP 2010041411
(71) Applicant: Mitsubishi Heavy Industries, Ltd., Tokyo 108-8215 (JP); Yoshimura Company, Nagoya-shi, Aichi 463-0002 (JP)
(72) Inventor: MORII Hirokazu, Tokyo 108-8215 (JP); YOSHIMURA Hyoji, Nagoya-shi Aichi 463-0002 (JP)
(74) Representative: Henkel, Breuer & Partner
(86) International application number: PCT/JP2010/067506
(87) International publication number: WO 2011/104921

(57) **Abstract**

A method for manufacturing a hollow engine valve, capable of simplifying the manufacturing process and reducing the manufacturing cost. A method for manufacturing a hollow engine valve is configured in such a manner that, in order to form the hollow shaft section of a half-finished product (1a) into a predetermined shape, the hollow shaft section is inserted in sequence into die holes (M1, M2, M(m-1), Mm, M(n-1), Mn'), which have different hole shapes, and subjected in sequence to drawing so as to reduce the outer diameter and the inner diameter of the hollow shaft section in stages and so as to stretch the length of the hollow shaft section in stages. In the method, the half-finished product (1a) is subjected to heat treatment so that the hardness thereof is lower than or equal to a predetermined level, a shaft end sealing section (15) is formed by increasing the wall thickness of the opening end of the hollow shaft section (12) toward the inside of the opening end by the die hole (Mn') of a die (Din'), the die hole (Mn') having an inner diameter adjusted to d2', and the gap in the shaft end sealing section (15) is welded.

## Description

### TECHNICAL FIELD

The present invention relates to a method for producing a hollow engine valve which can simplify production steps and reduce production cost.

### BACKGROUND ART

Among engine valves, various engine valves designed as follows are recently provided along with the increase in output and performance of an engine. An inside of the engine valve is formed to be hollow and this hollow portion is filled with metallic sodium serving as a coolant. This design reduces the weight, and improves the thermal conductivity by the action of metallic sodium filled in the hollow portion, compared to a solid engine valve. A conventional method for producing such a hollow engine valve is disclosed in, for example, Patent Documents 1, 2.

### PRIOR ART DOCUMENT

### PATENT DOCUMENT

Patent Document 1: Japanese Patent No. 4282900
Patent Document 2: Japanese Patent No. 4390291

### SUMMARY OF THE INVENTION

### PROBLEMS TO BE SOLVED BY THE INVENTION

However, in the conventional method for producing a hollow engine valve, the hollow engine valve as a finished product is obtained by producing multiple members separately and then eventually joining the members to each other. Accordingly, many steps must be performed to produce the hollow engine valve. Hence, this may make the production steps complicated and increase the production cost.

The present invention has been made to solve the problems described above, and an object thereof is to provide a method for producing a hollow engine valve which can simplify production steps and reduce production cost.

### MEANS FOR SOLVING THE PROBLEMS

In a method for producing a hollow engine valve according to a first aspect of the invention for solving the aforementioned problems, in which a hollow stem portion of a semi-finished product is shaped into a predetermined shape by sequentially inserting the hollow stem portion into a plurality of shaping holes different in hole shape to sequentially draw the hollow stem portion in such a way that an outer diameter dimension and an inner diameter dimension of the hollow stem portion are reduced stepwise and a length of the hollow stem portion is increased stepwise, the method for producing a hollow engine valve is characterized by comprising: subjecting the semi-finished product to heat treatment in such a way that a hardness of the semi-finished product becomes equal to or less than a predetermined hardness; shaping a stem end sealing portion by causing a wall thickness of an opening edge portion of the hollow stem portion to be increased toward an inner side of the opening edge portion, by using a last one of the shaping holes which has a hole diameter adjusted; and joining gap portions of the stem end sealing portion together.

The method for producing a hollow engine valve according to a second aspect of the invention for solving the aforementioned problems is characterized by further comprising adjusting a hole diameter of a stem shaping portion in the last one of the shaping holes, the stem shaping portion configured to shape the hollow stem portion.

The method for producing a hollow engine valve according to a third aspect of the invention for solving the aforementioned problems is characterized by further comprising injecting a coolant into the hollow stem portion before the drawing performed by using the last one of the shaping holes.

### EFFECT OF THE INVENTION

In the method for producing a hollow engine valve of the present invention, the semi-finished product subjected to heat treatment in such a way that the hardness thereof becomes equal to or less than the predetermined hardness is shaped to have the wall thickness of the opening edge portion of the hollow stem portion increased inward, by using the last shaping hole having the hole diameter thereof adjusted, and the gap portions of the stem end sealing portion shaped by this increase of wall thickness are joined together. By using this method, the number of parts forming the hollow engine valve 1 can be reduced. Thus, the method can simplify production steps and reduce production cost.

### BRIEF DESCRIPTION OF THE DRAWINGS

[Fig. 1] Fig. 1 is an overall configuration diagram of a cold forging apparatus to which a method for producing a hollow engine valve of the present invention is applied.
[Fig. 2] Part (a) includes a vertical cross-sectional view of a die of the cold forging apparatus which is provided for an n-th drawing step and a vertical cross-sectional view of a semi-finished product shaped with the die, and Part (b) includes a vertical cross-sectional view of a die of the cold forging apparatus which has been conventionally provided for the n-th drawing step and a vertical cross-sectional view of a semi-finished product shaped with the die.
[Fig. 3] Fig. 3 is a vertical cross-sectional view of a hollow engine valve produced by the producing method of the present invention.

### MODE FOR CARRYING OUT THE INVENTION

A method for producing a hollow engine valve of the present invention is described below in detail by using the drawings. Embodiment

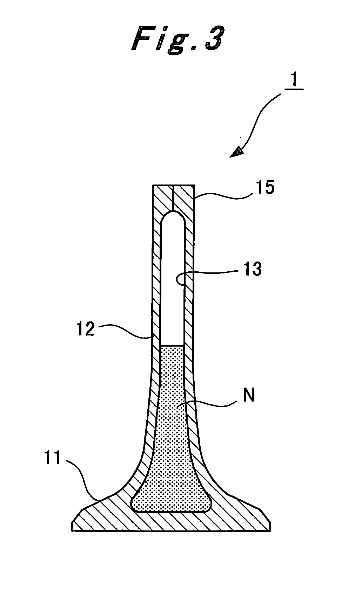

First, as shown in Fig. 3, a hollow engine valve 1 produced by the producing method of the present invention is used as an intake valve or an exhaust valve of an engine in a vehicle or the like. An inside of the hollow engine valve 1 is filled with metallic sodium N as a coolant.

The hollow engine valve 1 is one in which a valve umbrella portion 11, a hollow stem portion 12, and a stem end sealing portion 15 are shaped integrally. A hollow hole 13 is formed in the inside of the hollow engine valve 1, extending through the valve umbrella portion 11 and the hollow stem portion 12. Moreover, although described in detail later, in the stem end sealing portion 15, an opening edge portion on a base end (upper end) side of the hollow stem portion 12 is shaped to close by causing the wall thickness thereof to be increased toward an inner side of the opening edge portion, with the hollow hole 13 filled with the metallic sodium N. Lastly, gap portions in a center portion of the stem end sealing portion 15 are joined together.

Specifically, the hollow engine valve 1 is produced by using a cold forging apparatus 20 to be described later and the like. Metallic sodium N is injected into the hollow hole 13 during the cold forging, and the joining of the stem end sealing portion 15 is thereafter performed. Thus, the hollow engine valve 1 as a finished product can be obtained. Note that, the hollow engine valve 1 is sometimes not filled with metallic sodium N depending on usage conditions.

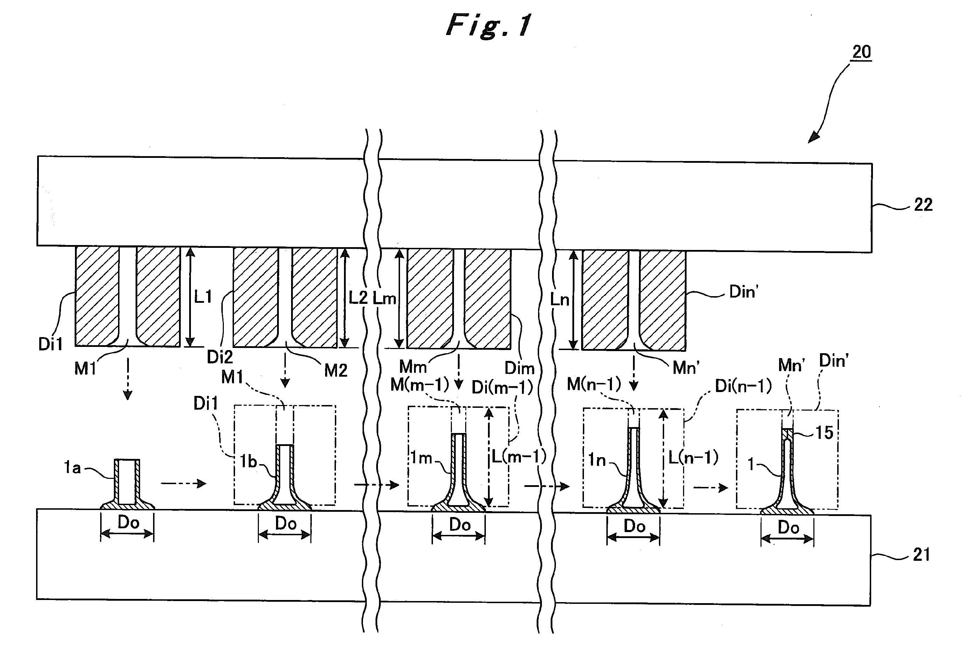

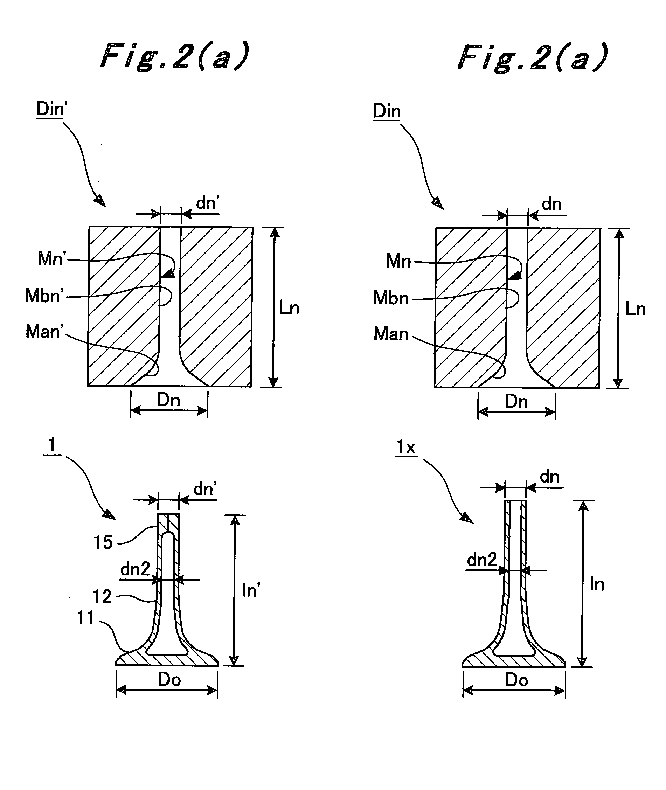

Next, the configuration of the cold forging apparatus 20 is described by using Fig. 1 and parts (a) and (b) of Fig. 2.

The cold forging apparatus 20 shown in Fig. 1 shapes the hollow engine valve 1 by sequentially drawing (cold-forging) a semi-finished product 1a. A press bed 21 is provided in a lower portion of the cold forging apparatus 20 while a ram 22 is provided in an upper portion of the cold forging apparatus 20 to face the press bed 21. The ram 22 is supported to be moveable in a vertical direction.

Tubular dies Di1, Di2, Di(m-1), Dim, Di(n-1), and Din' are provided on a bottom face of the ram 22 in line along a conveyance direction of the semi-finished products. Here, index m refers to m-th in the order and index n refers to n-th (last) in the order. Moreover, m<n is satisfied and m and n are each a positive integer equal to or larger than 3.

Shaping holes M1, M2, M(m-1), Mm, M(n-1), and Mn' each having a circular horizontal cross-section are opened respectively in center portions of the dies Di1, Di2, Di(m-1), Dim, Di(n-1), and Din'. The shaping holes are formed such that the inner diameters thereof are gradually reduced as the shaping holes are located more downstream in the conveyance direction. Moreover, the lengths (depths) of the respective shaping holes M1, M2, M(m-1), Mm, M(n-1), and Mn' are respectively L1, L2, L(m-1), Lm, L(n-1), and Ln, and the shaping holes are formed such that the lengths L1, L(m-1), Lm, L(n-1), and Ln are gradually increased as the shaping holes are located more downstream in the conveyance direction. In other words, these lengths are set such that L1< L2<L(m-1)<Lm<L(n-1)<Ln is satisfied.

Meanwhile, semi-finished products 1a, 1b, 1m, and 1n, and the hollow engine valve 1 can be conveyed and positioned on the top face of the press bed 21 by using conveyance means which is not illustrated.

The die Din' is described by using parts (a) and (b) of Fig. 2.

The die Din' is used to draw the semi-finished product 1n shaped by the die Di (n-1) and thereby obtain the hollow engine valve 1 as a semi-finished product (joining not yet performed) . In the hollow engine valve 1, the opening edge portion of the hollow stem portion 12 is closed to bulge toward the inner side thereof, and the stem end sealing portion 15 is thereby formed. Specifically, in the cold forging apparatus 20, the die Din' is provided instead of a die Din used conventionally to shape a hollow engine valve (valve body) 1x whose hollow stem portion has a uniform wall thickness and whose opening edge portion is opened.

As shown in part (a) of Fig. 2, the shaping hole Mn' of the die Din' is formed to have a length of Ln and includes a shaping portion (valve umbrella shaping portion) Man' for eventually shaping an upper portion of the valve umbrella portion 11 of the hollow engine valve 1 and a shaping portion (stem shaping portion) Mbn' for shaping the hollow stem portion 12 and the stem end sealing portion 15 of the hollow engine valve 1, the shaping portion Mbn' formed continuously with an upper portion of the shaping portion Man'. The shaping portion Man' is formed to have an inner diameter of Dn at the largest portion while the shaping portion Mbn' is formed to have an inner diameter of dn'.

The hollow engine valve 1 is shaped to have a length (height) of In' by performing drawing with the die Din' described above. Moreover, by this drawing, the hollow engine valve 1 is shaped in such a way that the hollow stem portion 12 and the stem end sealing portion 15 each have an outer diameter of dn' and the hollow stem portion 12 has an inner diameter of dn2.

Meanwhile, as shown in part (b) of the Fig. 2, a shaping hole Mn of the die Din is shaped to have a length of Ln and includes a shaping portion Man for eventually shaping an upper portion of a valve umbrella portion of the hollow engine valve 1x and a shaping portion Mbn for shaping a hollow stem portion of the hollow engine valve 1x, the shaping portion Mbn formed continuously with an upper portion of the shaping portion Man. The shaping portion Man is formed to have an inner diameter of Dn at the largest portion while the shaping portion Mbn is formed to have an inner diameter of dn which is larger than the inner diameter dn' (dn>dn').

The hollow engine valve 1x is shaped to have a length (height) of ln, which is larger than ln' (ln>ln'), by performing drawing with the die Din described above. Moreover, by this drawing, the hollow engine valve 1x is shaped such that the hollow stem portion has an outer diameter of dn, which is larger than the outer diameter dn', and an inner diameter of dn2.

In other words, compared to the die Din, the die Din' is set in such a way that the inner diameter dn' is smaller than the inner diameter dn. By using this die Din' , the hollow engine valve 1 having the stem end sealing portion 15 for closing the opening portion of the hollow stem portion 12 can be shaped.

The hollow engine valve 1 is produced as follows. First, a solid round-bar-shaped material which is not illustrated is subjected to hot forging and the semi-finished product 1a is thereby shaped. Thereafter, the semi-finished product 1a is subjected to heat treatment in such a way that the hardness thereof becomes equal to or less than a predetermined hardness. Next, the semi-finished product 1a having the hardness equal to or lower than the predetermined hardness is positioned at a point on the press bed 21 of the cold forging apparatus 20 which corresponds to the die Di1.

Then, elevation and decent operations of the ram 22 and conveyance operations and positioning operations of the conveyance means are performed sequentially and n times of drawing are sequentially performed with the dies Di1, Di2, Di(m-1),Dim, Di (n-1), and Din'. As a result, the semi-finished product 1a is sequentially shaped into the semi-finished products 1b, Ic, 1m, and In. This shaping causes the outer diameter dimension and the inner diameter dimension of each hollow stem portion to be reduced stepwise and the length of each hollow stem portion to be increased stepwise, and the hollow engine valve 1 is eventually formed.

Subjecting the semi-finished product 1a to heat treatment in such a way that the hardness thereof becomes equal to or less than the predetermined hardness has the following effect. In each of the semi-finished product 1a and the semi-finished products 1b, 1c, 1m, and 1n thereafter, it becomes easier to increase the wall thickness of the hollow stem portion and harder to increase the length of the hollow stem portion as the hardness of the semi-finished product becomes smaller.

By drawing the tempered semi-finished product 1n with the shaping hole Mn' of the die Din' adjusted to have the inner diameter of dn' as described above, the hollow engine valve 1 can be shaped to have the wall thickness of the opening edge portion of the hollow stem portion 12 increased toward the inner side thereof. Moreover, in the drawing with dies Di1, Di2, Di(m-1), Dim, and Di(n-1), since hole shapes of the respective shaping holes M1, M2, M(m-1), Mm, and M(n-1) of these dies are not adjusted from the conventional ones, the shaping is performed with the opening edge portion of each hollow stem portion opened.

Incidentally, in the drawing with the die Din', when the opening edge portion of the hollow stem portion 12 is not closed toward an inner side thereof by performing the drawing once, the drawing is performed multiple times until the wall thickness of the opening edge portion increases and the opening edge portion is thereby closed. Moreover, since the shaping holes M1, M2, M(m-1), Mm, M(n-1), and Mn' do not press lower portions of the valve umbrella portions in the semi-finished products 1a, 1b, 1m, and 1n, the outer diameters of the umbrella portions of the semi-finished products at the largest portions are maintained at Do.

Here, the hollow hole 13 is already filled with metallic sodium N after any one of the steps of drawing with the dies Di1, Di2, Di(m-1), Dim, and Di(n-1) in the cold forging apparatus 20. Hence, after the drawing to close the opening edge portion is performed, the hollow engine valve 1 as a finished product can be produced by joining the gap portions of the stem end sealing portion 15 together by, for example, filler welding or non-filler welding. Incidentally, the stem end sealing portion 15 is not exposed to an exhaust gas of a high temperature. Hence, the joining of the gap portions may be performed by blazing or the like, instead of welding.

In the method of producing a hollow engine valve of the present invention, the semi-finished product 1n subjected to heat treatment in such a way that the hardness thereof becomes equal to or less than a predetermined hardness is shaped to have the wall thickness of the opening edge portion of the hollow stem portion 12 increased toward an inner side thereof, by using the shaping hole Mn' of the die Din' adjusted to have the inner diameter of dn'. Thereafter, the gap portions of the stem end sealing portion 15 shaped by the increase in wall thickness are joined together. By using this method, the number of parts forming the hollow engine valve 1 can be reduced. Thus, the method can simplify production steps and reduce production cost.

### Industrial Applicability

The present invention can be applied to a hollow engine valve producing apparatus which is designed to produce hollow engine valves different in shape in a single producing apparatus by making dies replaceable.

## Claims

1. A method for producing a hollow engine valve in which a hollow stem portion of a semi-finished product is shaped into a predetermined shape by sequentially inserting the hollow stem portion into a plurality of shaping holes different in hole shape to sequentially draw the hollow stem portion in such a way that an outer diameter dimension and an inner diameter dimension of the hollow stem portion are reduced stepwise and a length of the hollow stem portion is increased stepwise, the method for producing a hollow engine valve **characterized by** comprising:
subjecting the semi-finished product to heat treatment in such a way that a hardness of the semi-finished product becomes equal to or less than a predetermined hardness;
shaping a stem end sealing portion by causing a wall thickness of an opening edge portion of the hollow stem portion to be increased toward an inner side of the opening edge portion, by using a last one of the shaping holes which has a hole diameter adjusted; and
joining gap portions of the stem end sealing portion together.

2. The method for producing a hollow engine valve according to claim 1, **characterized by** further comprising
adjusting a hole diameter of a stem shaping portion in the last one of the shaping holes, the stem shaping portion configured to shape the hollow stem portion.

3. The method for producing a hollow engine valve according to claim 1, **characterized by** further comprising
injecting a coolant into the hollow stem portion before the drawing performed by using the last one of the shaping holes.
